(19) **Europäisches Patentamt / European Patent Office / Office européen des brevets**

(11)  **EP 3 865 375 B1**

(12)  **EUROPEAN PATENT SPECIFICATION**

(45) Date of publication and mention
of the grant of the patent:
**27.07.2022 Bulletin 2022/30**

(21) Application number: **21153213.0**

(22) Date of filing: **25.01.2021**

(51) International Patent Classification (IPC):
*B62D 5/04* *(2006.01)*     *B62D 15/02* *(2006.01)*
*B62D 6/00* *(2006.01)*

(52) Cooperative Patent Classification (CPC):
**B62D 5/0418; B62D 6/002; B62D 15/021;**
**B62D 15/024;** B62D 15/0235

(54) **STEERING OPERATION APPARATUS**

LENKUNGSBEDIENUNGSVORRICHTUNG

APPAREIL DE COMMANDE DE DIRECTION

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **17.02.2020 JP 2020024078**

(43) Date of publication of application:
**18.08.2021 Bulletin 2021/33**

(73) Proprietor: **TOYOTA JIDOSHA KABUSHIKI**
**KAISHA**
**Toyota-shi, Aichi-ken, 471-8571 (JP)**

(72) Inventors:
• **TOYODA, Hiroyuki**
  **Aichi-ken, 471-8571 (JP)**
• **MURATA, Hiroki**
  **Aichi-ken, 471-8571 (JP)**

(74) Representative: **J A Kemp LLP**
**80 Turnmill Street**
**London EC1M 5QU (GB)**

(56) References cited:
**EP-A1- 3 040 254     EP-A1- 3 543 086**
**JP-A- 2015 044 498**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

1. Field of the Invention

The present invention relates to a steering operation apparatus mounted on a vehicle and configured to turn one tire-wheel assembly of the vehicle.

2. Description of Related Art

For example, a steering operation apparatus turns a tire-wheel assembly to a steered position associated with an operation position of a steering member. When the steering member is at a straightforward position (operation position for causing a vehicle to travel straightforward; may be referred to as "neutral position"), the tire-wheel assembly is also positioned at a straightforward position (steered position at which the tire-wheel assembly is positioned when the vehicle travels straightforward; may be referred to as "neutral position"). In Japanese Unexamined Patent Application Publication No. 2015-69245 (JP 2015-69245 A), symmetry of turning of a pair of right and left tire-wheel assemblies is calculated based on pieces of image data obtained by simultaneously imaging the tire-wheel assemblies by using cameras, and an operation position of a steering member that is detected by a sensor is corrected based on the symmetry. Document EP 3040254 A1 shows a steering operation apparatus configured to turn one of a plurality of tire-wheel assemblies of a vehicle, the steering operation apparatus comprising: a controller, wherein the controller is configured to execute, as a reference setting process for setting a reference action position being a reference of the action position of the steering: a first reference setting process based on a steered position of the tire-wheel assembly that is acquired based on image data on the tire-wheel assembly imaged by a camera.

SUMMARY OF THE INVENTION

Nowadays, researches have been conducted into a steering operation apparatus configured to independently turn one tire-wheel assembly with a force generated by an electric motor (may hereinafter be referred to as "single-wheel independent steering operation apparatus"). The single-wheel independent steering operation apparatus is not provided with a member that couples a pair of steering knuckles retaining right and left tire-wheel assemblies. Therefore, the steered positions of the right and left tire-wheel assemblies are likely to vary. The single-wheel independent steering operation apparatus need not have a sensor for detecting the steered position. To attain such an advantage, the tire-wheel assembly can be turned based on an action position of the electric motor having a specific relationship with the steered position of the tire-wheel assembly.

While an operation of a vehicle is stopped, that is, while an ignition switch (may hereinafter be referred to as "IG switch") is OFF, power supply to the steering operation apparatus is generally interrupted from the viewpoint of power saving. In the single-wheel independent steering operation apparatus configured to execute steering operation control for the tire-wheel assembly based on the action position of the electric motor, a controller cannot grasp the action position of the motor when the power supply to the steering operation apparatus is interrupted. When the tire-wheel assembly is turned by an external force applied to the tire-wheel assembly while the IG switch is OFF, the controller cannot execute accurate steering operation control after the IG switch is turned ON. In consideration of this fact, the following method may be employed as described in JP 2015-69245 A. That is, the steered position of the tire-wheel assembly is estimated by imaging the tire-wheel assembly, and the action position of the electric motor is set based on the estimation. However, the accuracy of the estimation of the steered position of the tire-wheel assembly through the imaging is relatively low. Therefore, there is a possibility that sufficiently accurate steering operation control cannot be executed even though the method described above is employed. The practicality of the single-wheel independent steering operation apparatus is improved when the action position of the electric motor can be set based on a sufficiently accurate steered position of the tire-wheel assembly. The present invention has been made under the circumstances described above, and can provide a single-wheel independent steering operation apparatus having high practicality.

A steering operation apparatus according to a first aspect of the present invention is configured to turn one of a plurality of tire-wheel assemblies of a vehicle independently of the other tire-wheel assemblies. The steering operation apparatus includes an electric motor, an action conversion mechanism, and a controller. The electric motor serves as a drive source. The action conversion mechanism is configured to convert an action of the electric motor into a turning action of the tire-wheel assembly. The controller is configured to control a supply current to the electric motor to turn the tire-wheel assembly based on an action position of the electric motor. The controller is configured to execute a first reference setting process and a second reference setting process as a reference setting process for setting a reference action position being a reference of the action position of the electric motor. The first reference setting process is executed based on a steered position of the tire-wheel assembly that is acquired based on image data on the tire-wheel assembly imaged by a camera. The second reference setting process is executed based on a supply current to the electric motor when the tire-wheel assembly is kept at a specific steered position or an arbitrary steered position while the vehicle is traveling.

In the aspect described above, the controller may be configured to determine a target action position, which is an action position of the electric motor that corresponds to an expected steered position of the tire-wheel assembly. The controller may be configured to determine the supply current to the electric motor based on an action position deviation, which is a deviation of an actual action position of the electric motor from the target action position.

In the aspect described above, the controller may be configured to control the supply current to the electric motor to supply the electric motor with a keeping current necessary to keep the steered position of the tire-wheel assembly at a target steered position while the vehicle is traveling.

In the aspect described above, the controller may be configured to execute the first reference setting process when an operation of the vehicle is started.

In the aspect described above, the controller may be configured to store a steered position of the tire-wheel assembly when the operation of the vehicle is stopped. The controller may be configured to execute the first reference setting process based on a difference between the stored steered position and a steered position acquired based on image data on the tire-wheel assembly when the operation of the vehicle is started.

In the aspect described above, the controller may be configured to execute the second reference setting process based on a difference between a current actually supplied to the electric motor and a standard current associated with the steered position of the tire-wheel assembly and a traveling speed of the vehicle.

In the aspect described above, the controller may be configured to store, as the standard current, a supply current to the electric motor that is actually detected while the vehicle is traveling.

In the aspect described above, the controller may be configured to execute the second reference setting process when the vehicle is traveling straightforward at a specific speed.

## BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1 is a perspective view illustrating a vehicle tire-wheel assembly installation module including a steering operation apparatus of an embodiment;
FIG. 2A is a schematic diagram illustrating the configuration of a vehicle in which the tire-wheel assembly installation module illustrated in FIG. 1 is mounted on each of a pair of front tire-wheel assemblies;
FIG. 2B is a perspective view illustrating how a camera configured to capture an image of the front tire-wheel assembly is installed on a door mirror of the vehicle;

FIG. 3A, FIG. 3B, and FIG. 3C are diagrams schematically illustrating images of the tire-wheel assembly that are captured by the camera;
FIG. 4 is a flowchart of a steering operation control program to be executed in the steering operation apparatus of the embodiment;
FIG. 5 is a flowchart of a starting program and a flowchart of a termination program to be executed in the steering operation apparatus of the embodiment; and
FIG. 6 is a flowchart of a steered position adjustment program to be executed in the steering operation apparatus of the embodiment.

## DETAILED DESCRIPTION OF EMBODIMENTS

As a mode for carrying out the present invention, a steering operation apparatus according to an embodiment of the present invention is described below in detail with reference to the drawings. The present invention may be carried out not only in the following embodiment but also in various modes changed or modified based on the knowledge of persons skilled in the art, including the modes described in the "SUMMARY OF THE INVENTION" section.

[A] Hardware Structure of Steering Operation Apparatus

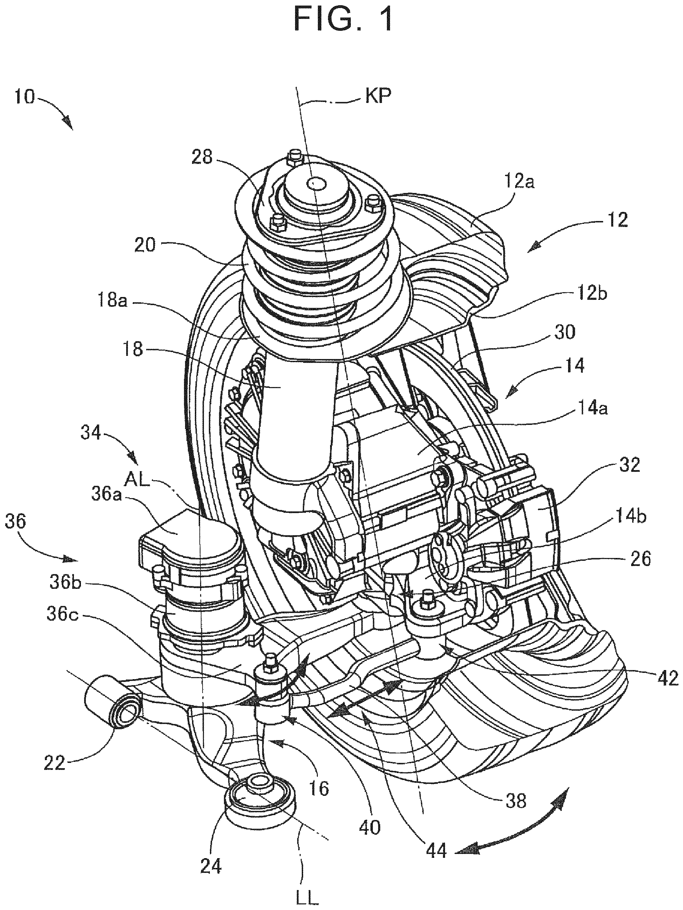

The steering operation apparatus of the embodiment is mounted in a vehicle tire-wheel assembly installation module 10 (may hereinafter be referred to simply as "module 10") illustrated in FIG. 1. The module 10 is configured to install a wheel 12b having a tire 12a on a vehicle body. The wheel 12b may be regarded as a tire-wheel assembly, but the wheel 12b having the tire 12a is referred to as "tire-wheel assembly 12" for convenience in this embodiment.

The module 10 includes a tire-wheel assembly drive unit 14 serving as a tire-wheel assembly rotationally driving apparatus. The tire-wheel assembly drive unit 14 includes a housing 14a, an electric motor (not illustrated), a speed reducer (not illustrated), and an axle hub (hidden in FIG. 1). The electric motor is a drive source housed in the housing 14a. The speed reducer reduces the speed of rotation of the electric motor. The wheel 12b is attached to the axle hub. The tire-wheel assembly drive unit 14 is a so-called in-wheel motor unit arranged on an inner side of a rim of the wheel 12b. The tire-wheel assembly drive unit 14 has a known structure, and therefore description of the structure is omitted herein.

The module 10 includes a MacPherson suspension (also referred to as "MacPherson strut"). In this suspension, the housing 14a of the tire-wheel assembly drive unit 14 functions as a carrier that rotatably retains the tire-wheel assembly and is allowed to move up and down relative to the vehicle body. Further, the housing 14a functions as a steering knuckle in the steering operation apparatus described later, and is allowed to move up and down relative to the vehicle body. Thus, the suspension includes a lower arm 16 serving as a suspension arm, the housing 14a of the tire-wheel assembly drive unit 14, a shock absorber 18, and a suspension spring 20.

The suspension has a general structure. To give a brief description, the lower arm 16 is shaped as a so-called L arm. The proximal end branches into two parts in a fore-and-aft direction of the vehicle. At the proximal end, the lower arm 16 is supported on a side member (not illustrated) of the vehicle body via a first bush 22 and a second bush 24 so as to be pivotable about an arm pivot axis LL. The distal end of the lower arm 16 is pivotably coupled to a lower part of the housing 14a of the tire-wheel assembly drive unit 14 via an arm-coupling ball joint 26 that is a first joint (may hereinafter be referred to as "first joint 26").

The lower end of the shock absorber 18 is stationarily supported on the housing 14a of the tire-wheel assembly drive unit 14. The upper end of the shock absorber 18 is supported on an upper part of a tire housing of the vehicle body via an upper support 28. The upper end of the suspension spring 20 is also supported on the upper part of the tire housing of the vehicle body via the upper support 28. The lower end of the suspension spring 20 is supported by a lower support 18a provided in a flange shape on the shock absorber 18. That is, the suspension spring 20 and the shock absorber 18 are installed in parallel between the lower arm 16 and the vehicle body.

The module 10 includes a brake. The brake includes a disc rotor 30 and a brake caliper 32. The disc rotor 30 is attached to the axle hub together with the wheel 12b, and rotates together with the tire-wheel assembly 12. The brake caliper 32 is retained by the housing 14a of the tire-wheel assembly drive unit 14 astride the disc rotor 30. Although detailed description is omitted, the brake caliper 32 includes a brake pad and a brake actuator. The brake pad serves as a friction member. The brake actuator includes an electric motor, and stops rotation of the tire-wheel assembly 12 by pressing the brake pad against the disc rotor 30 with a force of the electric motor. The brake is a so-called electric brake configured to generate a braking force depending on a force generated by an electric motor.

The module 10 includes a steering operation apparatus 34 according to the embodiment of the present invention. The steering operation apparatus 34 is a single-wheel independent steering operation apparatus configured to turn only one of a pair of right and left tire-wheel assemblies 12 independently of the other. The steering operation apparatus 34 mainly includes the housing 14a of the tire-wheel assembly drive unit 14, a steering operation actuator 36, and a tie rod 38. The housing 14a of the tire-wheel assembly drive unit 14 functions as the steering knuckle as described above (may hereinafter be referred to as "steering knuckle 14a" when handled as a component of the steering operation apparatus 34). The steering operation actuator 36 is installed on the lower arm 16 at a position near the proximal end of the lower arm 16. The tie rod 38 couples the steering operation actuator 36 to the steering knuckle 14a.

The steering operation actuator 36 includes a steering operation motor 36a, a speed reducer 36b, and an actuator arm 36c. The steering operation motor 36a is an electric motor serving as a drive source. The speed reducer 36b reduces the speed of rotation of the steering operation motor 36a. The actuator arm 36c functions as a pitman arm configured to pivot through the rotation of the steering operation motor 36a via the speed reducer 36b. The proximal end of the tie rod 38 is coupled to the actuator arm 36c via a rod proximal end-coupling ball joint 40 that is a second joint (may hereinafter be referred to as "second joint 40"). The distal end of the tie rod 38 is coupled to a knuckle arm 14b of the steering knuckle 14a via a rod distal end ball joint 42 that is a third joint (may hereinafter be referred to as "third joint 42").

In the steering operation apparatus 34, a line connecting the center of the upper support 28 to the center of the first joint 26 is a kingpin axis KP. By operating the steering operation motor 36a, the actuator arm 36c of the steering operation actuator 36 pivots about an actuator axis AL as indicated by a wide arrow in FIG. 1. The pivot is transmitted by the tie rod 38, and the steering knuckle 14a is pivoted about the kingpin axis KP. That is, the tire-wheel assembly 12 is turned as indicated by a wide arrow in FIG. 1. Due to the structure described above, the steering operation apparatus 34 includes an action conversion mechanism 44 including the actuator arm 36c, the tie rod 38, and the knuckle arm 14b, and configured to convert a rotational action of the steering operation motor 36a into a turning action of the tire-wheel assembly 12.

The steering operation actuator 36 of the steering operation apparatus 34 is installed on the lower arm 16. Therefore, the module 10 can easily be mounted on the vehicle body. The module 10 can be mounted on the vehicle by attaching the proximal end of the lower arm 16 to the side member of the vehicle body and attaching the upper support 28 to the upper part of the tire housing of the vehicle body. That is, the module 10 is excellent in its mountability on the vehicle.

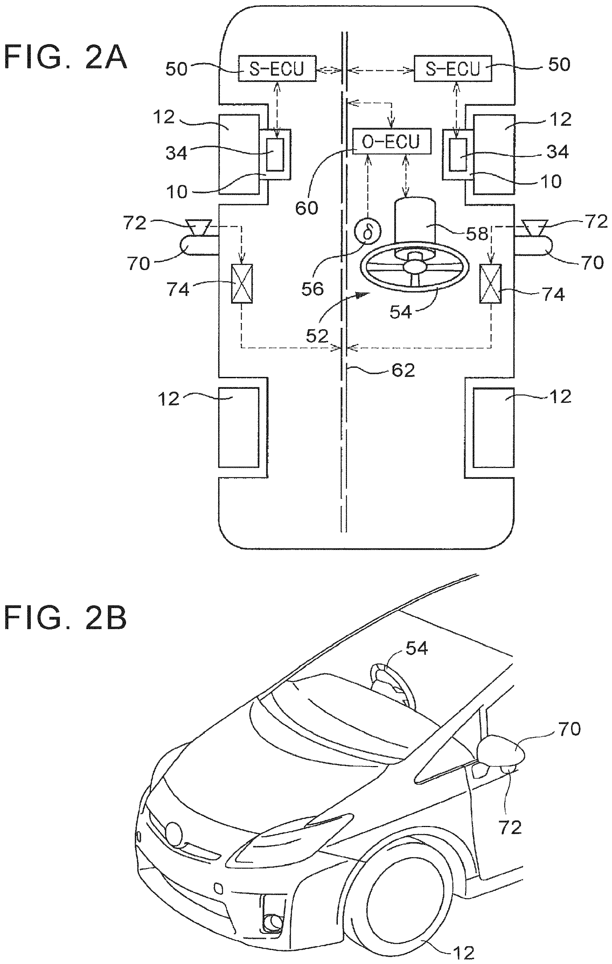

For example, as schematically illustrated in FIG. 2A, the module 10 can be arranged on each of the two right and left tire-wheel assemblies 12 of the vehicle (may hereinafter be referred to as "front tire-wheel assemblies 12"). To turn the tire-wheel assemblies 12, the steering operation apparatuses 34 of the two modules 10 of the vehicle are individually controlled by steering-operation electronic control units 50 serving as controllers (may hereinafter be abbreviated as "steering-operation ECUs"; shown as "S-ECU" in FIG. 2A). Specifically, the steering-operation ECU 50 associated with each module 10 controls the steering operation motor 36a of the steering operation apparatus 34 of the module 10, that is, controls a supply current to the steering operation motor 36a. Thus, the steering operation apparatus 34 may be regarded as including the steering-operation ECU 50. The steering-operation ECU 50 includes a computer including a central processing unit (CPU), a read-only memory (ROM), and a random-access memory (RAM), and a drive circuit for the steering operation motor 36a (for example, an inverter when the steering operation motor 36a is a brushless direct-current (DC) motor).

The vehicle may be regarded as including a steering system of the embodiment, which includes two steering operation apparatuses 34 associated with the two front tire-wheel assemblies 12, respectively. The steering system is a so-called steer-by-wire steering system, and includes, as its component, an operation apparatus 52 for receiving a driver's steering operation. The operation apparatus 52 includes a steering wheel 54, a steering sensor 56, a reaction force applying apparatus 58, and an operation electronic control unit 60 (may hereinafter be abbreviated as "operation ECU"; shown as "O-ECU" in FIG. 2A). The steering wheel 54 serves as a steering member. The steering sensor 56 detects an operation angle as an operation position of the steering member. The operation angle is a rotation angle of the steering wheel 54. The reaction force applying apparatus 58 applies an operation reaction force to the steering wheel 54. The operation ECU 60 is a controller of the operation apparatus 52. The steering-operation ECUs 50 and the operation ECU 60 are connected to a car area network or a controller area network (CAN) 62, and are communicable with one another via the CAN 62.

As illustrated in FIG. 2B, the vehicle includes cameras 72 installed on lower parts of right and left door mirrors 70 and to be used for monitoring the surroundings of the vehicle. The cameras 72 are configured to image the front tire-wheel assemblies 12, respectively. Image processing units 74 process pieces of image data on the front tire-wheel assemblies 12 imaged by the cameras 72, respectively. The pieces of processed image data can be received by the steering-operation ECUs 50 via the CAN 62, respectively.

[B] Control for Steering System

(i) Steering Operation Control

The steering-operation ECU 50 of the steering operation apparatus 34 executes steering operation control for turning the tire-wheel assembly 12 to a steered position $\psi$ determined in response to a driver's steering operation. Specifically, an operation angle of the steering wheel 54, that is, a steering position $\delta$ detected by the steering sensor 56 is acquired from the operation ECU 60 via the CAN 62 as a degree of the steering operation, and a target steered position $\psi^*$ is determined based on the acquired steering position $\delta$. The target steered position $\psi^*$ is an expected steered position $\psi$ of the tire-wheel assembly 12. A supply current I to the steering operation motor 36a is controlled such that the steered position $\psi$ of the tire-wheel assembly reaches the target steered position $\psi^*$. Assuming that a reference operation position $\delta_0$ is a straightforward position at which the vehicle travels straightforward, the steering position $\delta$ may be regarded as an amount of positional change from the reference operation position $\delta_0$, that is, a steering operation amount. Even if power supply is interrupted, the steering sensor 56 can constantly detect an operation angle of the steering wheel 54 over 360° from the same reference operation position $\delta_0$ when electric power is supplied again. The steered position $\psi$ is equivalent to a so-called steered angle. Assuming that a reference steered position $\psi_0$ is a straightforward position at which the tire-wheel assembly 12 is positioned in a state in which the vehicle travels straightforward, the steered position $\psi$ may be regarded as an amount of phase change from the reference steered position $\psi_0$, that is, a turning amount. To be exact, the positive or negative signs of values of the steering position $\delta$ and the steered position $\psi$ are reversed across the reference operation position $\delta_0$ and the reference steered position $\psi_0$, respectively.

In place of the steering position $\delta$, a torque applied by the driver to the steering wheel 54, that is, a steering operation force may be employed as the degree of the steering operation, and the target steered position $\psi^*$ may be determined based on the steering operation force. For example, if the tire-wheel assembly 12 is turned through autonomous driving though detailed description is omitted, the steering-operation ECU 50 may acquire the target steered position $\psi^*$ based on information from an autonomous driving system, and turn the tire-wheel assembly 12 based on the acquired target steered position $\psi^*$.

It is appropriate to determine a necessary steering operation torque Tq based on a steered position deviation $\Delta\psi$. The necessary steering operation torque Tq is a force of the actuator 36 that is necessary to turn the tire-wheel assembly 12 to the target steered position $\psi^*$ or keep the tire-wheel assembly 12 at the target steered position $\psi^*$. The steered position deviation $\Delta\psi$ is a deviation of an actual steered position $\psi$ from the target steered position $\psi^*$. The steering operation apparatus 34 does not have a steered position sensor configured to detect the actual steered position $\psi$. Therefore, the necessary steering operation torque Tq is determined based on an action position of the steering operation motor 36a because the steered position $\psi$ of the tire-wheel assembly 12 and the action position of the steering operation motor 36a have a specific relationship. Specifically, the action position of the steering operation motor 36a is an angle position of a motor shaft, that is, a motor rotation angle $\theta$ because the steering operation motor 36a is a rotational motor. The action position of the motor may be regarded as an action amount of the motor, specifically, an amount of change in the action position of the motor from a reference action position. The motor rotation angle $\theta$ may be regarded as a displacement angle from a reference motor rotation angle $\theta_0$ that is the reference action position. The motor rotation angle $\theta$ is accumulated over 360°. The reference motor rotation angle $\theta_0$ is set to a straightforward motor rotation angle being a position at which the vehicle travels straightforward. In the steering operation apparatus 34, the steering operation motor 36a and the steering knuckle 14a are mechanically coupled together, and an amount of change in the motor rotation angle $\theta$ of the steering operation motor 36a and an amount of change in the steered position $\psi$ of the tire-wheel assembly have a specific relationship. The amounts of change in those factors may have a relationship based on a predetermined ratio that depends on, for example, a speed reducing ratio of the speed reducer 36b. By using this relationship, the steering operation apparatus 34 controls the steered position $\psi$ through the control for the motor rotation angle $\theta$ instead of directly controlling the steered position $\psi$. To be exact, the positive or negative sign of the value of the motor rotation angle $\theta$ is reversed across the reference motor rotation angle $\theta_0$.

Specifically, the steering-operation ECU 50 of the steering operation apparatus 34 determines a target motor rotation angle $\theta^*$ as a target action position in terms of the motor rotation angle $\theta$ based on the target steered position $\psi^*$. The steering operation motor 36a is a brushless DC motor, and has a motor rotation angle sensor (for example, a Hall integrated circuit (IC) or a resolver) to switch phases in current supply to the steering operation motor 36a. Based on detection by the motor rotation angle sensor, the steering-operation ECU 50 grasps an actual motor rotation angle $\theta$, which is a current motor rotation angle $\theta$ with respect to the reference motor rotation angle $\theta_0$. The steering-operation ECU 50 determines a motor rotation angle deviation $\Delta\theta$ as an action position deviation. The motor rotation angle deviation $\Delta\theta$ is a deviation of the motor rotation angle $\theta$ from the target motor rotation angle $\theta^*$. Based on the motor rotation angle deviation $\Delta\theta$ (= $\theta^*$ - $\theta$), the steering-operation ECU 50 determines the necessary steering operation torque Tq by using the following expression.

$$Tq = G_P \cdot \Delta\theta + G_D \cdot (d\Delta\theta/dt) + G_I \cdot \int\Delta\theta dt$$

The above expression conforms to a feedback control rule based on the motor rotation angle deviation $\Delta\theta$. The first term, the second term, and the third term are a proportional term, a derivative term, and an integral term, respectively. The symbols "$G_P$", "$G_D$", and "Gi" represent a proportional gain, a derivative gain, and an integral gain, respectively.

The necessary steering operation torque Tq and the supply current I to the steering operation motor 36a have a specific relationship. Specifically, the necessary steering operation torque Tq and the supply current I nearly have a proportional relationship because the necessary steering operation torque Tq depends on a force generated by the steering operation motor 36a. By using this relationship, the steering-operation ECU 50 determines the supply current I to the steering operation motor 36a based on the determined necessary steering operation torque Tq, and supplies the current I to the steering operation motor 36a.

When the vehicle is traveling in a state in which the tire-wheel assembly 12 is turned, a self-aligning torque determined based on suspension geometry, that is, a force for positioning the tire-wheel assembly 12 at the straightforward position acts on the module 10. To keep the tire-wheel assembly 12 at the target steered position $\psi^*$, it is necessary to supply a certain current I to the steering operation motor 36a as a keeping current. When the above expression for determining the necessary steering operation torque Tq includes the integral term and the integral gain $G_I$ is set to an appropriate value, a keeping torque for keeping the tire-wheel assembly 12 at the target steered position $\psi^*$ is determined by determining the necessary steering operation torque Tq by using the above expression. The keeping current is determined based on the keeping torque.

Although the supply current I may indirectly be determined based on the motor rotation angle deviation $\Delta\theta$ via the necessary steering operation torque Tq as described above, the supply current I may directly be determined based on the motor rotation angle deviation $\Delta\theta$ by using the following expression without using the necessary steering operation torque Tq.

$$I = G_P{}' \cdot \Delta\theta + G_D{}' \cdot (d\Delta\theta/dt) + G_I{}' \cdot \int\Delta\theta dt$$

In the above expression, the symbols "$G_P$'", "$G_D$'", and "$G_I$'" represent a proportional gain, a derivative gain, and an integral gain, respectively.

(ii) Estimation of Steered Position of Tire-Wheel Assembly and Setting of Reference Motor Rotation Angle

As described above, the steered position $\psi$ of the tire-wheel assembly 12 and the motor rotation angle $\theta$ that is the action position of the steering operation motor 36a are associated with each other such that the respective straightforward positions, that is, the reference motor rotation angle $\theta_0$ of the steering operation motor 36a and the reference steered position $\psi_0$ of the tire-wheel assembly 12 match each other. Specifically, when the tire-wheel assembly 12 is positioned at the reference steered position $\psi_0$, the motor rotation angle $\theta$ is set to the reference motor rotation angle $\theta_0$. Through the detection by the motor rotation angle sensor, the steering-operation ECU 50 grasps the actual motor rotation angle $\theta$, which is a current motor rotation angle $\theta$ with respect to the reference motor rotation angle $\theta_0$.

When an IG switch is turned OFF, the power supply to the steering-operation ECU 50 and the steering operation motor 36a is interrupted, and the steering-operation ECU 50 cannot grasp the actual motor rotation angle $\theta$. Specifically, the steering operation apparatus 34 employs the speed reducer 36b having a relatively large speed reducing ratio, and therefore the steered position $\psi$ of the tire-wheel assembly 12 changes only by 1° to 2° relative to one rotation of the steering operation motor 36a. The motor rotation angle sensor can detect the angle position (phase) of the steering operation motor 36a within 360°. The steering-operation ECU 50 adds up the actual motor rotation angle $\theta$ based on the detected angle position and the set reference motor rotation angle $\theta_0$. When electric power is supplied again after the interruption of the power supply, the reference motor rotation angle $\theta_0$ is set based on a current position within 360°. For example, when the tire-wheel assembly 12 is moved to some extent while the current supply is interrupted, the steering operation motor 36a may be rotated over 360°. When the steering operation motor 36a is rotated over 360°, the actual motor rotation angle $\theta$ cannot be grasped correctly. As a result, the steered position $\psi$ of the tire-wheel assembly 12 deviates from a correct position. The deviation of the steered position $\psi$ of the tire-wheel assembly 12 may be regarded as a deviation of the reference motor rotation angle $\theta_0$ being a reference of the motor rotation angle $\theta$ from the straightforward position.

To prevent the deviation of the steered position $\psi$ of the tire-wheel assembly, the steering operation apparatus 34 executes a reference setting process for setting the reference motor rotation angle $\theta_0$ being a reference of the motor rotation angle $\theta$ of the steering operation motor 36a. The reference setting process includes two processes, that is, a first reference setting process and a second reference setting process different in terms of methods.

The first reference setting process is executed when the operation of the vehicle is started, specifically, when the IG switch is turned ON. The first reference setting process is executed based on a steered position $\psi$ of the tire-wheel assembly 12 that is estimated based on data on an image of the tire-wheel assembly 12 that is captured by the camera 72.

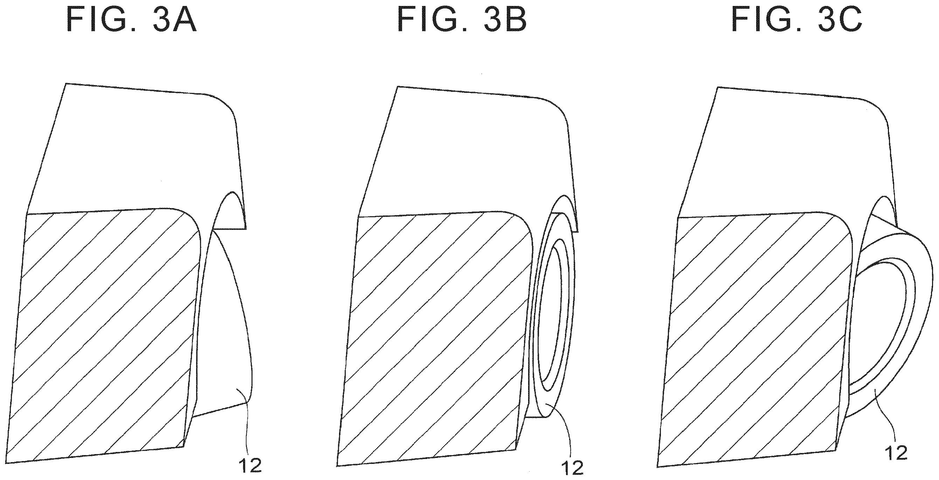

FIG. 3A, FIG. 3B, and FIG. 3C schematically illustrate images of the tire-wheel assembly 12, specifically, images of the right front tire-wheel assembly 12 that are obtained by the camera 72. FIG. 3B illustrates a state in which the tire-wheel assembly 12 is positioned at the straightforward position. FIG. 3A illustrates a state in which the tire-wheel assembly 12 is turned to the left from the straightforward position. FIG. 3C illustrates a state in which the tire-wheel assembly 12 is turned to the right from the straightforward position. Based on image data obtained by processing the image captured by the camera 72 in the image processing unit 74, the steering-operation ECU 50 estimates, as an initial steered position $\psi_{INT}$, a steered position $\psi$ of the tire-wheel assembly 12 at a timing when the IG switch is turned ON. The reference motor rotation angle $\theta_0$ is set by comparing the estimated initial steered position $\psi_{INT}$ with an initial target steered position $\psi^*_{INT}$, which is an expected steered position $\psi$ of the tire-wheel assembly 12 at that timing.

The initial target steered position $\psi^*_{INT}$ is selected from the following two steered positions. The first steered position is determined based on a steering position $\delta$ being an operation position of the steering wheel 54 when the IG switch is turned ON. The second steered position is a stored steered position $\psi_M$, which is a stored steered position $\psi$ of the tire-wheel assembly 12 estimated by using the camera 72 when the operation of the vehicle is stopped previously. The initial target steered position $\psi^*_{INT}$ may be selected by the driver or by a manufacturing or maintenance engineer of the vehicle.

The steering-operation ECU 50 determines an initial steered position deviation $\Delta\psi_{INT}$, which is a deviation of the initial steered position $\psi_{INT}$ from the initial target steered position $\psi^*_{INT}$. When the deviation $\Delta\psi_{INT}$, specifically, the absolute value of the deviation $\Delta\psi_{INT}$ is equal to or larger than a threshold deviation $\Delta\psi_{TH}$ set based on detectivity using the camera 72, the steering-operation ECU 50 determines that the steered position $\psi$ may deviate. As a deviation-eliminating steering operation, the steering-operation ECU 50 turns the tire-wheel assembly 12 by supplying a current to the steering operation motor 36a so as to eliminate the deviation $\Delta\psi_{INT}$. After the steering-operation ECU 50 executes the deviation-eliminating steering operation to achieve a steered position $\psi$ at which the initial steered position deviation $\Delta\psi_{INT}$ is 0, the steering-operation ECU 50 sets the reference motor rotation angle $\theta_0$ such that a motor rotation angle $\theta$ detected by the motor rotation angle sensor at this timing is associated with this steered position $\psi$. When the initial steered position deviation $\Delta\psi_{INT}$ is smaller than the threshold deviation $\Delta\psi_{TH}$, the steering-operation ECU 50 sets the reference motor rotation angle $\theta_0$ such that a motor rotation angle $\theta$ detected at this timing is associated with the initial target steered position $\psi^*_{INT}$. After the reference motor rotation angle $\theta_0$ is set, execution of the steering operation control is permitted.

Irrespective of the selection of the initial target steered position $\psi^*_{INT}$, the steering-operation ECU 50 causes the camera 72 to image the tire-wheel assembly 12 when the operation of the vehicle is stopped, that is, when the IG switch is turned OFF. The steering-operation ECU 50 stores a steered position $\psi$ of the tire-wheel assembly 12 at this timing as the stored steered position $\psi_M$.

The accuracy of the estimation of the steered position $\psi$ of the tire-wheel assembly 12 using the camera 72 is not sufficient. Therefore, the steered position $\psi$ may still deviate slightly though the first reference setting process is executed. Even if the steered position $\psi$ deviates slightly, there may occur an undesirable phenomenon such as partial wear of the tire 12a due to traveling of the vehicle for a long time. The second reference setting process is executed in order to execute steering operation control that can achieve a sufficiently accurate steered position $\psi$. The second reference setting process is executed based on a supply current I to the steering operation motor 36a when the tire-wheel assembly 12 is kept at a specific steered position $\psi$ while the vehicle is traveling. Specifically, the second reference setting process is executed based on a supply current I to the steering operation motor 36a when the steered position $\psi$ of the tire-wheel assembly 12 is kept at the straightforward position, that is, the reference steered position $\psi_0$. The steering operation control is executed while the vehicle is traveling. The second reference setting process is executed in parallel to the steering operation control.

In the second reference setting process, the steering-operation ECU 50 determines a current deviation $\Delta I$ under a condition that the vehicle keeps traveling straightforward (the target steered position $\psi^*$ is 0) for a predetermined time (for example, 1 sec) at a set vehicle speed $v_0$ (for example, 40 km/h) being a specific vehicle speed v. The current deviation $\Delta I$ is a deviation of the supply current I to the steering operation motor 36a from a standard current $I_{STD}$. When the current deviation $\Delta I$ (to be exact, its absolute value) is equal to or larger than a threshold deviation $\Delta I_{TH}$, the steering-operation ECU 50 determines that the steered position $\psi$ deviates. The standard current $I_{STD}$ is a supply current I to the steering operation motor 36a when the reference motor rotation angle $\theta_0$ is set correctly. The value of the standard current $I_{STD}$ in the state in which the vehicle is traveling straightforward is considerably small because no self-aligning torque is generated. Therefore, the threshold deviation $\Delta I_{TH}$ can be set to a considerably small value. Thus, the determination as to whether the steered position deviates is relatively accurate. Based on the determination, the steering-operation ECU 50 adjusts the reference motor rotation angle $\theta_0$ such that the current deviation $\Delta I$ reaches 0. Specifically, the relationship between the value of the current deviation $\Delta I$ and the amount of deviation of the steered position $\psi$ under the condition described above is grasped theoretically, and the steering-operation ECU 50 shifts the reference motor rotation angle $\theta_0$ by using this relationship. This adjustment achieves steering operation control in which the steered position $\psi$ is sufficiently accurate.

The standard current $I_{STD}$ is described. The steering-operation ECU 50 repeatedly stores, as the standard current $I_{STD}$, a supply current I when the current deviation $\Delta I$ is smaller than the threshold deviation $\Delta I_{TH}$ under the condition described above. That is, the standard current $I_{STD}$ is an actually measured value. In the second reference setting process, the steering-operation ECU 50 can therefore adjust the reference motor rotation angle $\theta_0$ through the sufficiently accurate determination as to whether the steered position $\psi$ deviates.

In place of the actually measured value, the standard current $I_{STD}$ may be, for example, a current value determined theoretically under the condition described above. Although the second reference setting process is executed under the condition that the vehicle is traveling straightforward at the set vehicle speed vo, the condition for the second reference setting process is not limited to this condition. When the vehicle speed v is kept at an arbitrary vehicle speed or when the steered position $\psi$ is kept at an arbitrary steered position, the standard current $I_{STD}$ may be determined as a theoretical value based on the vehicle speed v or the steered position $\psi$ at that timing, and the reference motor rotation angle $\theta_0$ may be adjusted based on a current deviation $\Delta I$ from the determined standard current $I_{STD}$.

In the steering operation apparatus 34, the second reference setting process is executed irrespective of whether the deviation-eliminating steering operation is executed after determination is made that the steered position $\psi$ deviates in the first reference setting process. The second reference setting process may be executed only when the deviation-eliminating steering operation is executed in the first reference setting process. Conversely, the second reference setting process may be avoided when the deviation-eliminating steering operation is not executed in the first reference setting process.

(iii) Control Flow

The steering operation control, the first reference setting process, and the second reference setting process are executed in a manner such that each steering-operation ECU 50 executes a steering operation control program, a starting program, and a steered position adjustment program. The processes based on those programs are sequentially described below briefly.

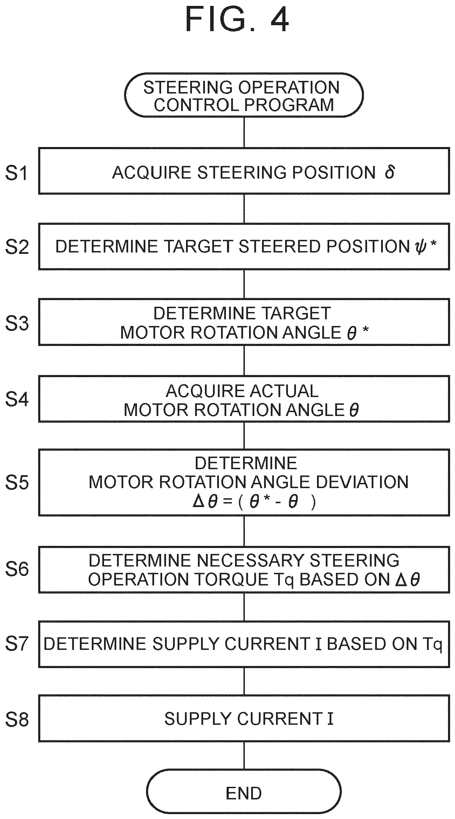

FIG. 4 is a flowchart of the steering operation control program, which is repeatedly executed by the steering-operation ECU 50 at a short time pitch (for example, several milliseconds to several tens of milliseconds). In the process based on this program, an operation position $\delta$ of the steering wheel 54 is first acquired in Step 1 (hereinafter abbreviated as "S1"; the same applies to the other steps). In S2, a target steered position $\psi^*$ is determined as a control target of the steered position $\psi$ of the tire-wheel assembly 12 based on the acquired operation position $\delta$. In S3, a target motor rotation angle $\theta^*$ is determined as a control target of the motor rotation angle $\theta$ based on the determined target steered position $\psi^*$.

In S4, an actual motor rotation angle $\theta$ is acquired as a current motor rotation angle of the steering operation motor 36a based on detection by the motor rotation angle sensor. In S5, a motor rotation angle deviation $\Delta\theta$ is determined as a deviation of the actual motor rotation angle $\theta$ from the target motor rotation angle $\theta^*$. In S6, a necessary steering operation torque Tq is determined as a steering operation torque to be generated by the actuator 36 by using the above expression related to the feedback control rule based on the determined motor rotation angle deviation $\Delta\theta$. In S7, a supply current I is determined as a current to be supplied to the steering operation motor 36a based on the determined necessary steering operation torque Tq. In S8, the determined supply current I is supplied to the steering operation motor 36a.

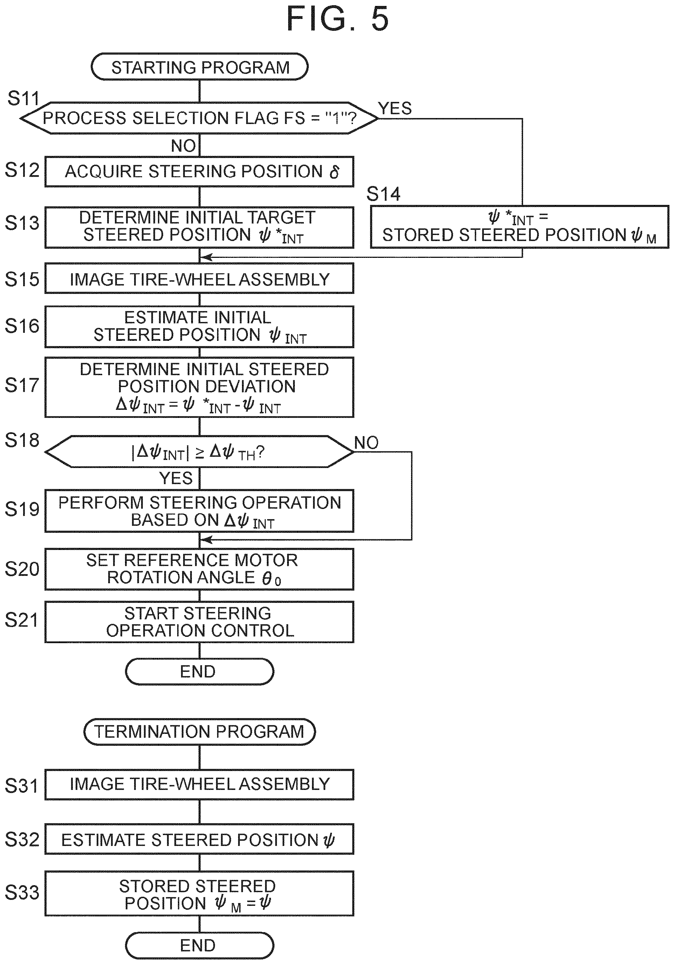

FIG. 5 is a flowchart of the starting program, which is executed only once by the steering-operation ECU 50 when the IG switch of the vehicle is turned ON. In the process based on this program, determination is first made in S11 whether the value of a process selection flag FS is "1". The process selection flag FS is used for selecting a certain steered position as the initial target steered position $\psi^*_{INT}$. The value of the process selection flag FS is "0" when a target steered position $\psi^*$ determined based on a steering position $\delta$ when the IG switch is turned ON is employed. The value of the process selection flag FS is "1" when the stored steered position $\psi_M$ is employed. When the value of the process selection flag FS is "0", processes of S12 and S13 are executed. When the value of the process selection flag FS is "1", the stored steered position $\psi_M$ is determined as the initial target steered position $\psi^*_{INT}$ in S14.

In S15, an instruction is issued to image the tire-wheel assembly 12 by using the camera 72. In S16, an initial steered position $\psi_{INT}$ is estimated based on image data on the tire-wheel assembly 12 that is obtained through the imaging. In S17, an initial steered position deviation $\Delta\psi_{INT}$ is determined. In S18, determination is made whether the absolute value of the initial steered position deviation $\Delta\psi_{INT}$ is equal to or larger than the threshold deviation $\Delta\psi_{TH}$. When determination is made that the absolute value of the initial steered position deviation $\Delta\psi_{INT}$ is equal to or larger than the threshold deviation $\Delta\psi_{TH}$, the deviation-eliminating steering operation is executed based on the initial steered position deviation $\Delta\psi_{INT}$ in S19. In S20, a reference motor rotation angle $\theta_0$ is set. When determination is made in S18 that the absolute value of the initial steered position deviation $\Delta\psi_{INT}$ is smaller than the threshold deviation $\Delta\psi_{TH}$, the reference motor rotation angle $\theta_0$ is set in S20 without executing the deviation-eliminating steering operation. After the reference motor rotation angle $\theta_0$ is set, execution of the steering operation control is permitted in S21.

FIG. 5 is also a flowchart of a termination program for storing, as the stored steered position $\psi_M$, a steered position $\psi$ when the operation of the vehicle is stopped. The termination program is executed only once by the steering-operation ECU 50 when the IG switch is turned OFF. In the process based on this program, an instruction is issued to image the tire-wheel assembly 12 by using the camera 72 in S31. In S32, a steered position $\psi$ at a timing when the operation of the vehicle is stopped is estimated based on image data on the tire-wheel assembly 12 that is obtained through the imaging. In S33, the estimated steered position $\psi$ is stored in the steering-operation ECU 50 as the stored steered position $\psi_M$.

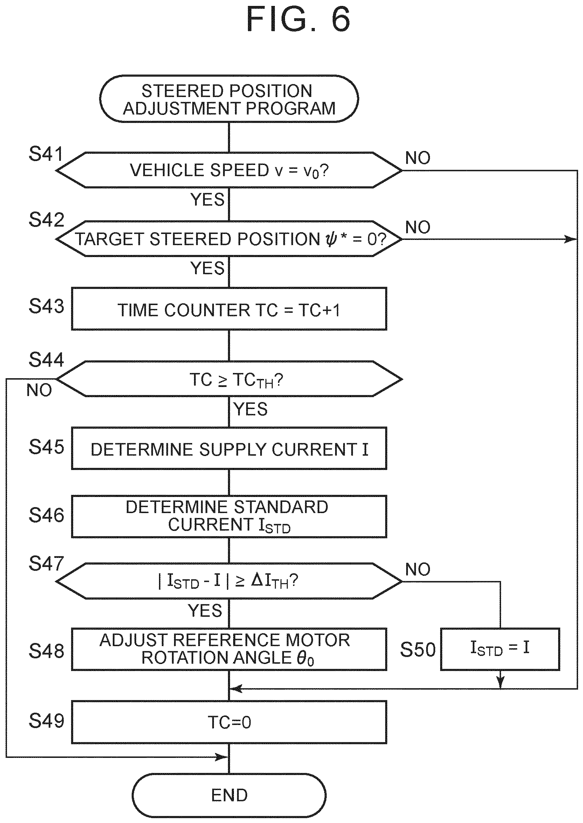

FIG. 6 is a flowchart of the steered position adjustment program, which is repeatedly executed by the steering-operation ECU 50 at a short time pitch (for example, several milliseconds to several tens of milliseconds) in parallel to the steering operation control program. In the process based on this program, determination is first made in S41 and S42 whether the vehicle speed v is the set vehicle speed vo and whether the target

steered position $\psi^*$ is 0, that is, the vehicle is traveling straightforward. When the vehicle is traveling straightforward at the set vehicle speed vo, a time counter TC is incremented in S43. The time counter TC indicates how long the vehicle keeps traveling straightforward at the set vehicle speed vo. When determination is made in S44 that the time counter TC reaches a threshold $TC_{TH}$, the condition is satisfied. In S45, a current I actually supplied to the steering operation motor 36a at that timing is determined. In S46, a standard current $I_{STD}$ is determined. In S47, determination is made whether the absolute value of a current deviation $\Delta I$ (= $I_{STD}$ - I) is equal to or larger than the threshold deviation $\Delta I_{TH}$. When the absolute value of the current deviation $\Delta I$ is equal to or larger than the threshold deviation $\Delta I$ the reference motor rotation angle $\theta_0$ is adjusted based on the current deviation $\Delta I$ in S48. After the reference motor rotation angle $\theta_0$ is adjusted, the time counter TC is reset in S49, and one execution of the program is terminated.

When determination is made in S47 that the absolute value of the current deviation $\Delta I$ is not equal to or larger than the threshold deviation $\Delta I$ a current I actually supplied to the steering operation motor 36a at that timing is stored as the standard current $I_{STD}$ in S50. When determination is made in S44 that the time counter TC does not reach the threshold $TC_{TH}$, one execution of the program is terminated without resetting the time counter TC. When determination is made in S41 or S42 that the vehicle speed v is not the set vehicle speed vo or that the vehicle is not traveling straightforward, the time counter TC is reset, and one execution of the program is terminated.

The steering operation apparatus of the present invention is configured to execute the second reference setting process based on electric power suppled to the electric motor in addition to the first reference setting process executed based on image data on the tire-wheel assembly. When the vehicle is traveling, a force for positioning the tire-wheel assembly at the straightforward position (may be referred to as "self-aligning torque") acts on the tire-wheel assembly from a road. To keep the steered position of the tire-wheel assembly, the electric motor needs to generate a force against the self-aligning torque. Therefore, a certain current (may be referred to as "keeping current") is supplied to the electric motor. The magnitude of the self-aligning torque depends on a steered position of the tire-wheel assembly and a traveling speed of the vehicle (may be referred to as "vehicle speed"). The magnitude of the keeping current depends on the magnitude of the self-aligning torque. The second reference setting process uses those relationships to estimate the steered position of the tire-wheel assembly and set a reference action position being a reference of the action position of the electric motor based on the estimation. The first reference setting process has an advantage in that the process can be executed relatively quickly and easily. According to the second reference setting process, a certain length of time is required to stably grasp the supply current, but the steered position of the tire-wheel assembly can be grasped sufficiently accurately, and the reference action position of the electric motor can be set sufficiently accurately. Since the two types of reference setting process having different characteristics can be executed, the steering operation apparatus of the present invention has high practicality.

For example, when the electric motor is a rotational motor, the action position of the electric motor refers to a rotation angle position of the motor shaft, that is, a motor rotation angle of the electric motor. Similarly, the steered position of the tire-wheel assembly refers to a steered angle of the tire-wheel assembly. Further, the action position of the electric motor may be regarded as an action amount from the reference action position. The reference action position can typically be set as the straightforward position, which is an action position in a state in which the vehicle is traveling straightforward. Similarly, the steered position of the tire-wheel assembly may be regarded as a turning amount from the reference steered position. The reference steered position can typically be set as the straightforward position, which is a steered position in the state in which the vehicle is traveling straightforward. When the reference steered position related to the steered position of the tire-wheel assembly and the reference action position related to the action position of the electric motor match each other, the steered position of the tire-wheel assembly can appropriately be controlled in response to, for example, an operation for the steering member (may be referred to as "steering operation") by controlling the action position of the electric motor based on the steering operation. The two reference setting processes, that is, the first reference setting process and the second reference setting process may be regarded as processes for setting the reference action position of the electric motor so as to match the steered position of the tire-wheel assembly with the action position of the electric motor.

The basic steering operation control of the controller may involve determining a target action position, which is an action position of the electric motor that corresponds to an expected steered position of the tire-wheel assembly, and determining a supply current to the electric motor based on an action position deviation, which is a deviation of an actual action position of the electric motor from the target action position. For example, the target action position or a target steered position, which is the expected steered position of the tire-wheel assembly, may be determined based on a driver's steering operation. Specifically, the supply current to the electric motor may be determined in accordance with the feedback control rule based on the action position deviation. To keep a steered position at a timing when the tire-wheel assembly is turned by a certain turning amount from the straightforward position while the vehicle is traveling, it is desirable that the electric motor be supplied with a current for applying, to the tire-wheel assembly, a force against the self-aligning torque that is a force for returning the tire-wheel assembly to the straightforward position. Thus, it is desirable that the controller control the supply current to the electric motor such that the electric motor is supplied with a keeping current necessary to keep the steered position of the tire-wheel assembly at the target steered position even when the degree of the steering operation does not change. Therefore, it is appropriate to optimize the gain of the integral term in the expression for determining the supply current in accordance with the feedback control rule.

As described above, the first reference setting process is inferior to the second reference setting process in terms of the accuracy of the setting of the reference action position of the electric motor, but can be executed easily, in other words, quickly. Because of this advantage, it is desirable that the first reference setting process be executed when the operation of the vehicle is started, that is, when the IG switch is turned ON, in order to quickly start the steering operation control. Considering an external force acting on the tire-wheel assembly when the IG switch is OFF, it is more desirable that the first reference setting process be executed every time the operation of the vehicle is started.

For example, the target steered position may be determined based on an operation status of the steering member when the operation of the vehicle is started, and the first reference setting process may be executed based on a difference between the target steered position and a steered position acquired based on image data on the tire-wheel assembly at that timing. For example, a steered position of the tire-wheel assembly may be stored when the operation of the vehicle is stopped, and the first reference setting process may be executed based on a difference between the stored steered position and a steered position acquired based on image data on the tire-wheel assembly when the operation of the vehicle is started.

The second reference setting process can be executed based on a difference between a current actually supplied to the electric motor while the vehicle is traveling and the standard current associated with the steered position of the tire-wheel assembly and the traveling speed of the vehicle. For example, when the tire-wheel assembly is kept at a certain steered position, the standard current may be determined as a current to be supplied to the electric motor against the self-aligning torque based on a vehicle speed and a target steered position of the tire-wheel assembly. For example, the standard current may be stored as a supply current to the electric motor that is actually detected while the vehicle is traveling, specifically, as a current when the vehicle is traveling at a specific vehicle speed and the steered position of the tire-wheel assembly is kept at a specific position. Considering that the self-aligning torque is hardly applied and the difference between the standard current and the current actually supplied to the electric motor is grasped easily, it is desirable that the second reference setting process be executed when the vehicle is traveling straightforward at a specific speed.

## Claims

1. A steering operation apparatus (34) configured to turn one of a plurality of tire-wheel assemblies of a vehicle independently of the other tire-wheel assemblies, the steering operation apparatus (34) comprising:

   an electric motor serving as a drive source;
   an action conversion mechanism (44) configured to convert an action of the electric motor into a turning action of the tire-wheel assembly; and
   a controller configured to control a supply current to the electric motor to turn the tire-wheel assembly based on an action position of the electric motor, wherein
   the controller is configured to execute, as a reference setting process for setting a reference action position being a reference of the action position of the electric motor:

   a first reference setting process based on a steered position of the tire-wheel assembly that is acquired based on image data on the tire-wheel assembly imaged by a camera; and
   a second reference setting process based on a supply current to the electric motor when the tire-wheel assembly is kept at a specific steered position or an arbitrary steered position while the vehicle is traveling.

2. The steering operation apparatus (34) according to claim 1, wherein

   the controller is configured to determine a target action position, which is an action position of the electric motor that corresponds to an expected steered position of the tire-wheel assembly, and
   the controller is configured to determine the supply current to the electric motor based on an action position deviation, which is a deviation of an actual action position of the electric motor from the target action position.

3. The steering operation apparatus (34) according to claim 2, wherein the controller is configured to control the supply current to the electric motor to supply the electric motor with a keeping current necessary to keep the steered position of the tire-wheel assembly at a target steered position while the vehicle is traveling.

4. The steering operation apparatus (34) according to any one of claims 1 to 3, wherein the controller is configured to execute the first reference setting process when an operation of the vehicle is started.

5. The steering operation apparatus (34) according to claim 4, wherein

   the controller is configured to store a steered position of the tire-wheel assembly when the operation of the vehicle is stopped, and
   the controller is configured to execute the first reference setting process based on a difference between the stored steered position and a steered position acquired based on image data on the tire-wheel assembly when the operation of the vehicle is started.

6. The steering operation apparatus (34) according to any one of claims 1 to 5, wherein the controller is configured to execute the second reference setting process based on a difference between a current actually supplied to the electric motor and a standard current associated with the steered position of the tire-wheel assembly and a traveling speed of the vehicle.

7. The steering operation apparatus (34) according to claim 6, wherein the controller is configured to store, as the standard current, a supply current to the electric motor that is actually detected while the vehicle is traveling.

8. The steering operation apparatus (34) according to any one of claims 1 to 7, wherein the controller is configured to execute the second reference setting process when the vehicle is traveling straightforward at a specific speed.

## Patentansprüche

1. Lenkbetriebseinrichtung (34), die dazu konfiguriert ist, eine von einer Mehrzahl von Reifen-Rad-Baugruppen eines Fahrzeugs unabhängig von den anderen Reifen-Rad-Baugruppen zu lenken, wobei die Lenkbetriebseinrichtung (34) umfasst:

   einen Elektromotor, der als eine Antriebsquelle dient;
   einen Aktionsumwandlungsmechanismus (44), der dazu konfiguriert ist, eine Aktion des Elektromotors in eine Drehaktion der Reifen-Rad-Baugruppe umzuwandeln; und
   eine Steuervorrichtung, die dazu konfiguriert ist, einen Versorgungsstrom zu dem Elektromotor zu steuern, um die Reifen-Rad-Baugruppe auf Grundlage einer Aktionsposition des Elektromotors zu drehen, wobei
die Steuervorrichtung dazu konfiguriert ist, als einen Referenzeinstellvorgang zum Einstellen einer Referenzaktionsposition, die eine Referenz der Aktionsposition des Elektromotors ist, auszuführen:

einen ersten Referenzeinstellvorgang auf Grundlage einer gelenkten Position der Reifen-Rad-Baugruppe, die auf Grundlage von Bilddaten auf der Reifen-Rad-Baugruppe, die von einer Kamera abgebildet werden, erfasst wird; und
einen zweiten Referenzeinstellvorgang, der auf einem Versorgungsstrom für den Elektromotor basiert, wenn die Reifen-Rad-Baugruppe in einer spezifischen gelenkten Position oder einer beliebigen gelenkten Position gehalten wird, während das Fahrzeug fährt.

2. Lenkbetriebseinrichtung (34) nach Anspruch 1, wobei

die Steuervorrichtung dazu konfiguriert ist, eine Zielaktionsposition zu bestimmen, die eine Aktionsposition des Elektromotors ist, die einer erwarteten gelenkten Position der Reifen-Rad-Baugruppe entspricht, und
die Steuervorrichtung dazu konfiguriert ist, den Versorgungsstrom für den Elektromotor auf Grundlage einer Aktionspositionsabweichung zu bestimmen, die eine Abweichung einer tatsächlichen Aktionsposition des Elektromotors von der Zielaktionsposition ist.

3. Lenkbetriebseinrichtung (34) nach Anspruch 2, wobei die Steuervorrichtung dazu konfiguriert ist, den Versorgungsstrom zu dem Elektromotor zu steuern, um den Elektromotor mit einem Haltestrom zu versorgen, der nötig ist, um die gelenkte Position der Reifen-Rad-Baugruppe in einer gelenkten Zielposition zu halten, während das Fahrzeug fährt.

4. Lenkbetriebseinrichtung (34) nach einem der Ansprüche 1 bis 3, wobei die Steuervorrichtung dazu konfiguriert ist, den ersten Referenzeinstellvorgang auszuführen, wenn ein Betrieb des Fahrzeugs gestartet wird.

5. Lenkbetriebseinrichtung (34) nach Anspruch 4, wobei

die Steuervorrichtung dazu konfiguriert ist, eine gelenkte Position der Reifen-Rad-Baugruppe zu speichern, wenn der Betrieb des Fahrzeugs gestoppt ist, und
die Steuervorrichtung dazu konfiguriert ist, den ersten Referenzeinstellvorgang auf Grundlage einer Differenz zwischen der gespeicherten gelenkten Position und einer gelenkten Position auszuführen, die auf Grundlage von Bilddaten auf der Reifen-Rad-Baugruppe erfasst wird, wenn der Betrieb des Fahrzeugs gestartet wird.

6. Lenkbetriebseinrichtung (34) nach einem der Ansprüche 1 bis 5, wobei die Steuervorrichtung dazu konfiguriert ist, den zweiten Referenzeinstellvorgang auf Grundlage einer Differenz zwischen einem dem Elektromotor tatsächlich zugeführten Strom und einem Standardstrom, der der gelenkten Position der Reifen-Rad-Baugruppe zugeordnet ist, und einer Fahrgeschwindigkeit des Fahrzeugs auszuführen.

7. Lenkbetriebseinrichtung (34) nach Anspruch 6, wobei die Steuervorrichtung dazu konfiguriert ist, als den Standardstrom einen Versorgungsstrom für den Elektromotor zu speichern, der während der Fahrt des Fahrzeugs tatsächlich erfasst wird.

8. Lenkbetriebseinrichtung (34) nach einem der Ansprüche 1 bis 7, wobei die Steuervorrichtung dazu konfiguriert ist, den zweiten Referenzeinstellvorgang auszuführen, wenn das Fahrzeug mit einer bestimmten Geschwindigkeit geradeausfährt.

## Revendications

1. Appareil d'opération de braquage (34) configuré pour tourner un d'une pluralité d'ensembles pneu-roue d'un véhicule indépendamment des autres ensembles pneu-roue, l'appareil d'opération de braquage (34) comprenant :

un moteur électrique servant de source d'entraînement ;
un mécanisme de conversion d'action (44) configuré pour convertir une action du moteur électrique en une action de braquage de l'ensemble pneu-roue ; et
une unité de commande configurée pour commander un courant d'alimentation au moteur électrique pour tourner l'ensemble pneu-roue sur la base d'une position d'action du moteur électrique, dans lequel
l'unité de commande est configurée pour exécuter, en tant que processus de réglage de référence pour régler une position d'action de référence, étant une référence de la position d'action du moteur électrique :

un premier processus de réglage de référence sur la base d'une position braquée de l'ensemble pneu-roue qui est acquise sur la base de données d'image sur l'ensemble pneu-roue imagé par une caméra ; et
un second processus de réglage de référence sur la base d'un courant d'alimentation au moteur électrique lorsque l'ensemble pneu-roue est maintenu à une position braquée spécifique ou une position braquée arbitraire alors que le véhicule est en train de se déplacer.

2. Appareil d'opération de braquage (34) selon la revendication 1, dans lequel

l'unité de commande est configurée pour déterminer une position d'action cible, qui est une position d'action du moteur électrique qui correspond à une position braquée prévue de l'ensemble pneu-roue, et
l'unité de commande est configurée pour déterminer le courant d'alimentation au moteur électrique sur la base d'un écart de position d'action, qui est un écart d'une position d'action réelle du moteur électrique par rapport à la position d'action cible.

3. Appareil d'opération de braquage (34) selon la revendication 2, dans lequel l'unité de commande est configurée pour commander le courant d'alimentation au moteur électrique pour alimenter le moteur électrique en un courant de maintien nécessaire pour maintenir la position braquée de l'ensemble pneu-roue à une position braquée cible alors que le véhicule est en train de se déplacer.

4. Appareil d'opération de braquage (34) selon l'une quelconque des revendications 1 à 3, dans lequel l'unité de commande est configurée pour exécuter le premier processus de réglage de référence lorsqu'un fonctionnement du véhicule est démarré.

5. Appareil d'opération de braquage (34) selon la revendication 4, dans lequel

l'unité de commande est configurée pour stocker une position braquée de l'ensemble pneu-roue lorsque le fonctionnement du véhicule est arrêté, et
l'unité de commande est configurée pour exécuter le premier processus de réglage de référence sur la base d'une différence entre la position braquée stockée et une position braquée, acquise sur la base de données d'image sur l'ensemble pneu-roue, lorsque le fonctionnement du véhicule est démarré.

6. Appareil d'opération de braquage (34) selon l'une quelconque des revendications 1 à 5, dans lequel l'unité de commande est configurée pour exécuter le second processus de réglage de référence sur la base d'une différence entre un courant réellement fourni au moteur électrique et un courant standard associé à la position braquée de l'ensemble pneu-roue et une vitesse de déplacement du véhicule.

7. Appareil d'opération de braquage (34) selon la revendication 6, dans lequel l'unité de commande est configurée pour stocker, en tant que courant standard, un courant d'alimentation au moteur électrique qui est réellement détecté alors que le véhicule est en train de se déplacer.

8. Appareil d'opération de braquage (34) selon l'une quelconque des revendications 1 à 7, dans lequel l'unité de commande est configurée pour exécuter le second processus de réglage de référence lorsque le véhicule est en train de se déplacer tout droit à une vitesse spécifique.

# FIG. 1

FIG. 2A

FIG. 2B

FIG. 3C

FIG. 3B

FIG. 3A

# FIG. 4

```
        ┌─────────────────────────────┐
        │    STEERING OPERATION       │
        │    CONTROL PROGRAM          │
        └─────────────────────────────┘
```

S1 | ACQUIRE STEERING POSITION $\delta$

S2 | DETERMINE TARGET STEERED POSITION $\psi*$

S3 | DETERMINE TARGET MOTOR ROTATION ANGLE $\theta*$

S4 | ACQUIRE ACTUAL MOTOR ROTATION ANGLE $\theta$

S5 | DETERMINE MOTOR ROTATION ANGLE DEVIATION $\Delta\theta = ( \theta* - \theta )$

S6 | DETERMINE NECESSARY STEERING OPERATION TORQUE Tq BASED ON $\Delta\theta$

S7 | DETERMINE SUPPLY CURRENT I BASED ON Tq

S8 | SUPPLY CURRENT I

```
        ┌─────────────────────────────┐
        │            END              │
        └─────────────────────────────┘
```

# FIG. 5

```
        ( STARTING PROGRAM )
```

S11  ⟨ PROCESS SELECTION FLAG FS = "1"? ⟩ —— YES

NO

S12 | ACQUIRE STEERING POSITION $\delta$

S14

S13 | DETERMINE INITIAL TARGET STEERED POSITION $\psi^*_{INT}$

$\psi^*_{INT} =$ STORED STEERED POSITION $\psi_M$

S15 | IMAGE TIRE-WHEEL ASSEMBLY

S16 | ESTIMATE INITIAL STEERED POSITION $\psi_{INT}$

S17 | DETERMINE INITIAL STEERED POSITION DEVIATION $\Delta\psi_{INT} = \psi^*_{INT} - \psi_{INT}$

S18  ⟨ $|\Delta\psi_{INT}| \geq \Delta\psi_{TH}$? ⟩ —— NO

YES

S19 | PERFORM STEERING OPERATION BASED ON $\Delta\psi_{INT}$

S20 | SET REFERENCE MOTOR ROTATION ANGLE $\theta_0$

S21 | START STEERING OPERATION CONTROL

( END )

( TERMINATION PROGRAM )

S31 | IMAGE TIRE-WHEEL ASSEMBLY

S32 | ESTIMATE STEERED POSITION $\psi$

S33 | STORED STEERED POSITION $\psi_M = \psi$

( END )

# FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015069245 A

- EP 3040254 A1